# EUROPEAN PATENT SPECIFICATION

(11) **EP 1 356 654 B1**
(45) Date of publication and mention of the grant of the patent: **19.01.2005**
(21) Application number: 02710928.9
(22) Date of filing: 01.02.2002
(51) Int. Cl.: H04L 29/06, H04L 12/56

(54) **SYSTEM AND METHOD FOR ASSIGNING DYNAMIC IP-ADDRESSES**
SYSTEM UND VERFAHREN ZUM ZUWEISEN DYNAMISCHER IP-ADRESSEN
SYSTEME ET PROCEDE D'ATTRIBUTION D'ADRESSES IP DYNAMIQUES

(30) Priority: 02.02.2001 FI 20010196
(43) Date of publication of application: 29.10.2003
(73) Proprietor: TeliaSonera Finland Oyj, 00510 Helsinki (FI)
(72) Inventor: LAHDENSIVU, Kimmo, FIN-33820 Tampere (FI); TSOKKINEN, Mikko, FIN-33820 Tampere (FI)
(86) International application number: PCT/FI2002/000075
(87) International publication number: WO 2002/065729

(56) References cited:
- EP-A2- 0 998 099
- WO-A1-01/03402
- WO-A1-01/69858
- WO-A2-01/97483

## Description

This invention relates to a method according to the preamble of attached claim 1 for assigning IP addresses. The invention also relates to a system according to the preamble of attached claim 8.

A data link can be established from data processing devices through an optional communications network, for example, to service devices (servers) of different service providers. The data processing devices thereby comprise means for connecting to a communications network, such as a modem or the like. The user can browse the service provider's home pages on the Internet, for example, order products electronically, pay bills, etc. Further, an optional communications network can be used for establishing a remote connection to a company's data network. The data network can be a Virtual Private Network (VPN), formed by utilizing a public data network, such as the Internet, for example. The company's offices are here interconnected through a public communications network, and other than the company's employees are preferably prevented from connecting to the network.

A user who has connected through an optional communications network is assigned or has an individual address valid for the duration of the connection. The address uniquely identifies the user's data processing device on the data network. Using this address, the packages intended to the user can be routed to the right data processing device. The address is usually an IP (Internet Protocol) address, which may be a static address allocated to a certain user. Usually, however, the address is dynamic, whereby a connection-specific address is allocated for a connection from the Internet operator's address space, for example. The address is thus usually assigned to the user quite at random from among the free IP addresses, or the first free address is assigned. In this case, personalized IP addresses cannot be provided to the user, because it is not known where the customer will be routed. Further, the users may load the service devices very unevenly, because it is possible that most users are routed to one and the same service device.

US Patent 5,812,819 discloses a method for assigning dynamic IP (Internet Protocol) addresses. In the US publication, a user at a remote computer is provided access to a communications network by a remote access device coupled to the network concerned. The remote access device receives from the remote computer a username which uniquely identifies the user on the network. The remote access device then obtains an IP address from a server on the network. The server dynamically assigns the IP address based on the username. The IP address uniquely identifies the network user, and it is needed to enable the remote computer to communicate on the network. If the user closes the connection or the connection to the network is disconnected for some other reason, and if the user then later attempts to re-gain access to the network by sending the same usemame to any remote access device, the server assigns that user the same IP address as the previous time. This means, at worst, that one IP address is reserved for each potential username, whereby at least as many IP addresses are needed as the remote users have usernames on the network. Probably not all the remote users for whom an IP address has been reserved are connected to the network simultaneously, so the number of IP addresses that have been reserved but are not in use is very large. This is not sensible, for the number of IP addresses available is limited (IPv4, Internet Protocol version 4). Moreover, the US publication does not state anything about dividing the load.

In the prior art, a load has been divided by means of level 4 switches of the OSI model (Open Systems Interconnection), for example, but the division is not controlled, and so it is not known which device serves which user, and it not even necessarily known whether a user is served by one and the same device throughout the session. Traditionally in the ISP world (Internet Service Provider), a plural number of instances have been replicated from the series of devices implementing the service. Replicating the entire system with a view to scaling the system is, however, rather expensive and inefficient.

An object of the present invention is to provide a method and a system for providing mobile users and other dynamic Internet users with personalized services. The invention also enables efficient division of the load of different service devices. In this document, personalized service refers to value-added services provided for the user's IP connection, such as a firewall, Virtual Private Network (VPN), Classes of Service (CoS), URL blocks (Uniform Resource Locator), etc. If the service has a large number of users, services cannot be configured statically on the devices implementing the services. Further, the services cannot be implemented only in a single instance on the device implementing the service, if the service has a large number of simultaneous users. The invention enables provision of personalized services for a large number of users. To put it more specifically, the method according to the present invention is primarily characterized by what is disclosed in the characterizing part of attached claim 1. The data transmission system of the present invention is primarily characterized by what is disclosed in the characterizing part of attached claim 8.

With the present invention, major advantages are achieved over the methods and systems of the prior art. The management system comprises several IP address pools, each reserved for a device implementing a specified service. The system assigns addresses to opened connections preferably alternately from each pool. The load is thereby divided evenly between the service devices. The invention enables the provision of personalized services to a large number of users, for the management system knows through which devices the user's IP packages pass and what IP address they use, because the system assigns the IP addresses to the data processing devices. Further, since the addresses are assigned in a controlled manner, configurations can be made, if needed, on devices located on the route of the IP packages, and they can also be removed from there as the session terminates. Configuration needs to be made only on a single service device, since it is know through which device the IP package will pass.

The invention is described below in greater detail with reference to the attached drawing, in which
- Fig. 1: is a simplified block diagram of a system according to a preferred embodiment of the invention,
- Fig. 2: is a simplified block diagram of a system according to a second preferred embodiment of the invention, and
- Fig. 3: is a simplified flow diagram of a method according to a preferred embodiment of the invention.

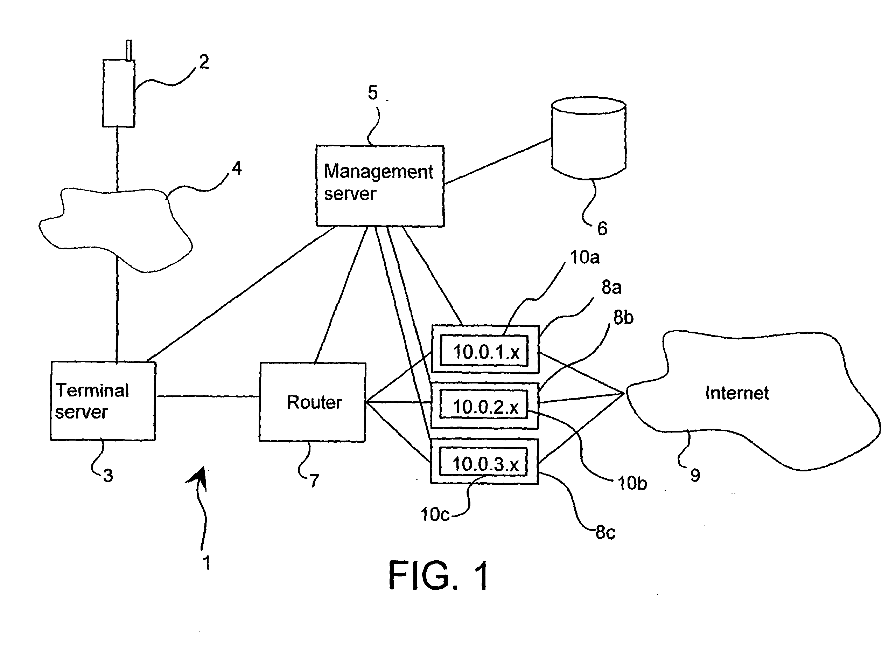

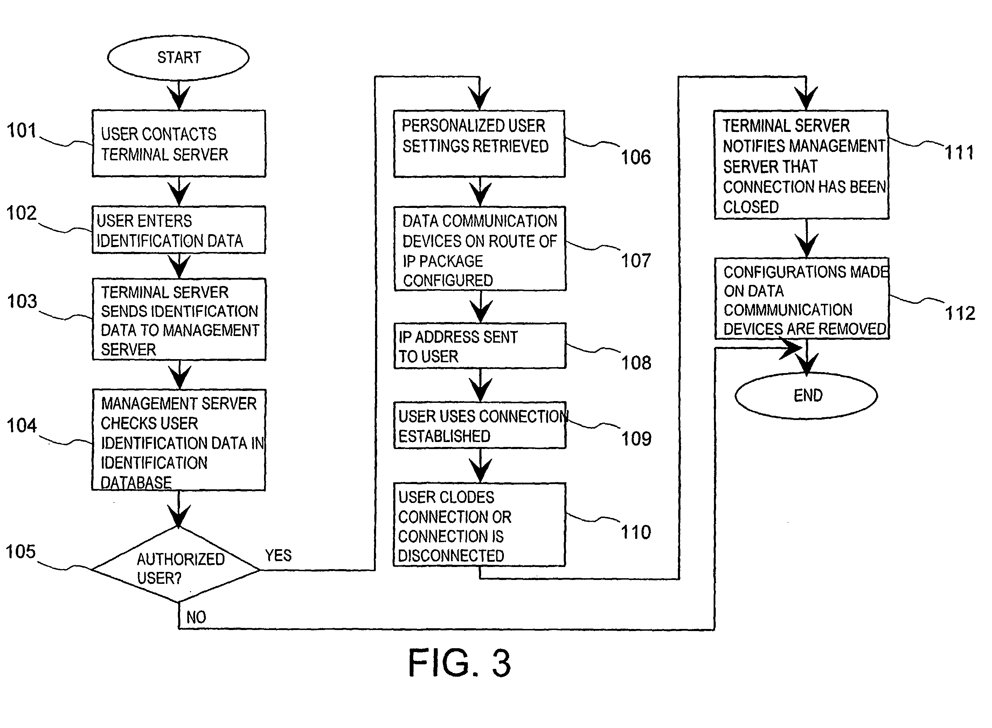

Fig. 1 shows a data transfer system 1 according to a preferred embodiment of the invention, where the user establishes a dynamic data link to a terminal server 3 by a data processing device 2 (101 in Fig. 3). The data processing device 2 is a Personal Computer (PC), for example, comprising a modem or the like, by which the user can connect to an optional communications network 4.

The data processing device can also be a wireless communications device with data processing features. The modem, in turn, may be a radio card or a corresponding wireless modem. The communications network 4 may be a wired communications network (Public Switched Telephone Network, or PSTN) or a wireless communications network. The communications network 4 forms a data channel (tunnel) between the data processing device 2 and the terminal server 3. Where a wireless communications network, such as GPRS (General Packet Radio Service), is concerned, the data channel is called a GPRS Tunnelling Protocol (GTP) and the data processing device is a GPRS terminal device. The terminal server 3 is a server device of an Internet service provider, for example. In this case, the user has made an agreement with the operator and has preferably been given a username, in addition to which the user may still need a password to be able to set up a connection. At the beginning of a connection, the user's data processing device is usually assigned a dynamic address from a certain group of addresses. The address is used in data transmission between the data processing device 2 and the data network 4 in a manner known per se.

The terminal server 3 is arranged to communicate with a management server 5, for example. When a connection is established, the user's username and password are forwarded to the terminal server 3, so that the user can be identified and abuse can be prevented (102 in Fig. 3). The terminal server 3 then retrieves the identification data through the management server 5. The terminal server 3 preferably sends a connection setup message according to an identification protocol, such as Radius, to the management server 5 (103 in Fig. 3). The connection setup message includes, for example, the user's username and password, most preferably encrypted with an encryption key. The management server 5 comprises an identification database 6, where the system attempts to identify the user on the basis of the user's username, password and potential other identifiers (104 in Fig. 3). If the user is identified (105 in Fig. 3), the user's personalized user settings are retrieved (106 in Fig. 3), and the management server sends an IP address to the user's data processing device (108 in Fig. 3).

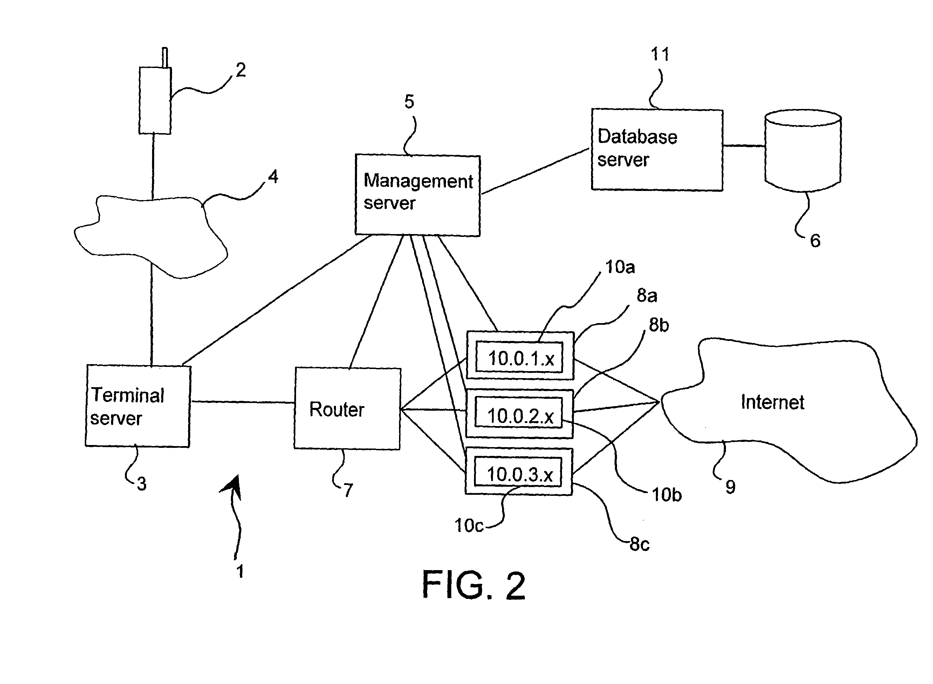

The management server 5 may also function only as a Radius proxy server, whereby the system also comprises a database server 11 (Fig. 2). The management server 5 here forwards the messages received from the terminal server 3 to the database server, and the database server 11 retrieves the identification data from the identification database 6 on the basis of the user's usemame and password. When the user has been identified and the user's right to access the services he or she seeks to access have been verified, the management server sends an IP address to the user's data processing device 2. It is naturally also possible that the user's identification data and personalized settings are found in various databases. For example, there may be at least two Radius databases for users and a separate database for personalized data. In this document, the identification database 6 refers to all databases where the user's identification data and personalized settings can be found.

The management server 5 and terminal server 3 communicate in accordance with the above-mentioned Radius protocol, for example, which is designed particularly for identification and billing applications. The management server 5 and the potential database server 11 also preferably use the Radius protocol in mutual communication. Naturally, other protocols may also be used.

Further, at least to service devices 8a, 8b, 8c are connected to the system, each service device having at least one address pool 10a, 10b, 10c. In the example of Fig. 1, the pool 10a of the first service device 8a comprises addresses 10.0.1.0 to 10.0.1.255, the pool 10b of the second service device 8b comprises the addresses 10.0.2.0 to 10.0.2.255, etc. The service devices are connected directly or indirectly to a data network, such as the Internet or the company's own local area network.

If the system 1 is used only to divide the load, all service devices preferably offer the same service or services. The management server 5 here selects an IP address preferably alternately from a pool of each service device. The management server may also select an address from the address pool which has the least number of reserved IP addresses. The load is thereby divided as evenly as possible between the service devices. If, for example, the user is assigned the address 10.0.1.3, the traffic from the address concerned is always routed to the first service device 8a, to the address pool 10a of which the address belongs. Because the management system assigns the IP addresses to the data processing devices 2, the system also knows through which devices the user's IP packages pass and what IP address they use. Based on this information, the services available to the user can be personalized. Before an IP address is sent to the data processing device 2 (108 in Fig. 3), personalized user settings are most preferably configured on all data communication devices 7, 8a, 8b, 8c on the route of the package (107 in Fig. 3). The aim of this step is to provide a data link between the terminal server 3 and one or more service devices 8a, 8b, 8c for the use of at least one service. Communication between the management server 5 and service device 8a, 8b, 8c is implemented by SNMP (Simple Network Management Protocol), for example, but other protocols can naturally also be used.

When the user has used the connection for as long as he or she desires (109 in Fig. 3) and closes the connection or the connection is disconnected for some other reason (110 in Fig. 3), the terminal server 3 notifies he management server 5 that the session has terminated (111 in Fig. 3). The management server thereby preferably removes the personalized user settings from those data communication devices on the route of the IP package that have served the user (112 in Fig. 3). Since addresses are assigned in a controlled manner, configurations can be made, if needed, on the data communication devices 7, 8a, 8b, 8c and removed from them as the session terminates. Most preferably, only one device 8a, 8b, 8c implementing the service is configured, because it is known through which device the IP package will pass.

The system 1 of the invention can also be used in such a way that the service devices 8a, 8b, 8c offer different services to the users, whereby each service device has at least one address pool 10a, 10b, 10c. The management server 5 here assigns the user an IP address from the address pool of that service device which offers the service that the user wants. If several service devices offer the same service, the data processing device 2 is assigned an IP address preferably from that address pool of a service device offering the service which has the least number of reserved IP addresses. Even in this case, before an IP address is sent to the data processing device 2, personalized user settings are configured on all data communication devices 7, 8a, 8b, 8c on the route of the package.

Further, one and the same service device 8a, 8b, 8c can also offer several services or different profiles of a single service, whereby there is at least one address pool 10a, 10b, 10c for each service or each service profile. It the service device has a different address pool for each service profile, the data communication devices 7, 8a, 8b, 8c on the route of the IP package need not be configured separately for each connection. The IP address can here be selected only from the address pool corresponding to the right profile, since the settings corresponding to the profiles have most preferably been set permanently on all devices on the route of the package.

Further, there may be several service devices 8a, 8b, 8c one after the other, whereby an IP address is preferably assigned to the user based on the first service device used. Naturally, other ways of selecting an IP address can also be employed.

By the data processing device 2, the user can find information on the data network 9, for example, and send information through the data network to another data processing device (not shown), for example. The information to be sent is converted in the data processing device 2 to a form that allows it to be transferred in the data transfer system; and correspondingly, when information is received from the data transfer system 1, necessary conversion is conducted so that the information can be utilized by the application, such as a browser program, for example.

The above preferred embodiments of the invention are not restricted to apply only to the communications networks mentioned, such as the PSTN or GPRS network: the idea of the invention can also be applied as such to all other communications networks where IP addresses or the like are used to identify users and terminal devices. Moreover, it will be obvious to a person skilled in the art that the invention can be modified within the scope of the attached claims.

## Claims

1. A method for assigning IP addresses in a controlled manner in a data transfer system (1) that comprises at least one data network (9), in which method a user's data processing device (2) connects to a terminal server (3), user identification is conducted in an identification database (6), and if the user is identified, at least one dynamic data link is established to transfer data between the user's data processing device (2) and the data network (9), and an IP address is then assigned to the user's data processing device (2) for the duration of the connection, the method being **characterized in that** at least two service devices (8a, 8b, 8c) are provided with at least one address pool each (10a, 10b, 10c), and the management server (5) assigns an IP address to the said data processing device (2) from the address pool (10a, 10b, 10c) of that service device (8a, 8b, 8c) to which the user is to be routed to use at least one service provided by said service device (8a, 8b, 8c).

2. A method according to claim 1, **characterized in that** IP packages are transmitted through at least one data communication device (7, 8a, 8b, 8c), and that personalized user settings as well as the user's identification data are stored in the identification database (6) and retrieved in addition to the user's identification data, the personalized user settings being configured on at least one data communication device (7, 8a, 8b, 8c) on the route of the IP package before an IP address is sent to the data processing device (2), and the configurations being removed from said at least one data communication device (7, 8a, 8b, 8c) when the session has terminated.

3. A method according to claim 1, **characterized in that** IP packages are transmitted through at least one data communication device (7, 8a, 8b, 8c), and that personalized user settings, or user profile, as well as the user's identification data are stored in the identification database (6) and retrieved in addition to the user's identification data, and that at least one address pool (10a, 10b, 10c) is reserved for each profile; settings corresponding to each profile being defined, most preferably statically, on at least one data communication device (7, 8a, 8b, 8c) on the route of the IP package, and an IP address being assigned to the data processing device (2) from the address pool (10a, 10b, 10c) corresponding to said profile.

4. A method according to claim 1, 2 or 3, **characterized in that** an IP address is assigned to the data processing device (2) alternately from the address pool (10a, 10b, 10c) of each service device (8a, 8b, 8c) that provides the service desired by the user.

5. A method according to claim 1, 2 or 3, **characterized in that** an IP address is assigned to the data processing device (2) from that address pool (10a, 10b, 10c) of the service device (8a, 8b, 8c) providing the service desired by the user which has the least number of reserved IP addresses.

6. A method according to claim 1, 2 or 3, **characterized in that** if the user wants access to various services on different service devices (8a, 8b, 8c), an IP address is assigned to the data processing device (2) from the address pools (10a, 10b, 10c) of those service devices (8a, 8b, 8c) which provide the service that the user has indicated first.

7. A data transfer system (1) that comprises at least one data network (9), at least one terminal server (3), and at least one identification database (6) which contains data for identifying users, means for identifying users in the identification database (6), and if the user is identified, means for establishing at least one data link to transfer data between a data processing device (2) and the data network (9), and means for assigning an IP address to the user's data processing device (2) for the duration of the connection, **characterized in that** the data transfer system (1) further comprises at least two service devices (8a, 8b, 8c), each having at least one address pool (10a, 10b, 10c), and the data transfer system (1) further comprising means (5) for transmitting an IP address to the data processing device (2) of the identified user from the address pool (10a, 10b, 10c) of that service device (8a, 8b, 8c) to which the user is to be routed.

8. A data transfer system (1) according to claim 7, **characterized in that** the identification database (6) comprises personalized user settings as well as the user's identification data, and that the data transfer system (1) further comprises at least one data communication device (7, 8a, 8b, 8c) on the route of the IP package, means (5) for configuring the at least one data communication device (7, 8a, 8b, 8c) on the route of the package in accordance with the personalized settings, means (3) for detecting that the user connection is closed, and means (5) for removing the above configurations when the connection has closed.

9. A data transfer system (1) according to claim 7, **characterized in that** the identification database (6) comprises personalized user settings, or user profile, as well as the user's identification data, at least one address pool (10a, 10b, 10c) being reserved for each profile; and that the data transfer system (1) further comprises at least one data communication device (7, 8a, 8b, 8c) on the route of the IP package; settings corresponding to each profile being most preferably defined statically on the data communication device, and means (5) for transmitting an IP address being arranged to transmit an IP address to the data processing device (2) from the address pool (10a, 10b, 10c) corresponding to said profile.

## Patentansprüche

1. Verfahren zum gesteuerten Zuteilen von IP-Adressen in einem Datenübermittlungssystem (1), das mindestens ein Datennetz (9) umfasst, wobei in dem Verfahren eine Datenverarbeitungseinrichtung (2) eines Benutzers sich mit einem Endserver (3) verbindet, in einer Identifikationsdatenbank (6) eine Benutzeridentifizierung ausgeführt wird und, wenn der Benutzer identifiziert wird, mindestens eine dynamische Datenstrecke zum Übermitteln von Daten zwischen der Datenverarbeitungseinrichtung (2) des Benutzers und dem Datennetz (9) hergestellt wird und dann der Datenverarbeitungseinrichtung (2) des Benutzers für die Dauer der Verbindung eine IP-Adresse zugeteilt wird, wobei das Verfahren **dadurch gekennzeichnet ist, dass** mindestens zwei Diensteinrichtungen (8a, 8b, 8c) mit jeweils mindestens einer Adressdatenbasis (10a, 10b, 10c) ausgestattet werden und der Verwaltungsserver (5) der Datenverarbeitungseinrichtung (2) aus der Adressdatenbasis (10a, 10b, 10c) der Diensteinrichtung (8a, 8b, 8c), zu der der Benutzer zur Verwendung mindestens eines von der Diensteinrichtung (8a, 8b, 8c) bereitgestellten Diensts geleitet wird, eine IP-Adresse zuteilt.

2. Verfahren nach Anspruch 1, **dadurch gekennzeichnet, dass** IP-Pakete durch mindestens eine Datenkommunikationseinrichtung (7, 8a, 8b, 8c) übertragen werden und dass personalisierte Benutzereinstellungen wie auch die Identifikationsdaten des Benutzers in der Identifikationsdatenbank (6) gespeichert und zusätzlich zu den Identifikationsdaten des Benutzers abgerufen werden, die personalisierten Benutzereinstellungen auf mindestens einer Datenkommunikationseinrichtung (8, 7a, 7b, 7c) auf dem Leitweg des IP-Pakets konfiguriert werden, bevor eine IP-Adresse an die Datenverarbeitungseinrichtung (2) gesendet wird, und die Konfigurationen von der mindestens einen Datenkommunikationseinrichtung (7, 8a, 8b, 8c) entfernt werden, wenn die Sitzung beendet ist.

3. Verfahren nach Anspruch 1, **dadurch gekennzeichnet, dass** IP-Pakete durch mindestens eine Datenkommunikationseinrichtung (7, 8a, 8b, 8c) übertragen werden und dass personalisierte Benutzereinstellungen bzw. ein Benutzerprofil wie auch die Identifikationsdaten des Benutzers in der Identifikationsdatenbank (6) gespeichert und zusätzlich zu den Identifikationsdaten des Benutzers abgerufen werden und dass für jedes Profil mindestens eine Adressdatenbasis (10a, 10b, 10c) reserviert wird; jedem Profil entsprechende Einstellungen auf mindestens einer Datenkommunikationseinrichtung (7, 8a, 8b, 8c) auf dem Leitweg des IP-Pakets besonders bevorzugt statisch definiert und der Datenverarbeitungseinrichtung (2) aus der dem Profil entsprechenden Adressdatenbasis (10a, 10b, 10c) eine IP-Adresse zugeteilt wird.

4. Verfahren nach Anspruch 1, 2 oder 3, **dadurch gekennzeichnet, dass** der Datenverarbeitungseinrichtung (2) abwechselnd aus der Adressdatenbasis (10a, 10b, 10c) jeder Diensteinrichtung (8a, 8b, 8c), die den vom Benutzer erwünschten Dienst bereitstellt, eine IP-Adresse zugeteilt wird.

5. Verfahren nach Anspruch 1, 2 oder 3, **dadurch gekennzeichnet, dass** der Datenverarbeitungseinrichtung (2) aus derjenigen Adressdatenbasis (10a, 10b, 10c) der Diensteinrichtung (8a, 8b, 8c), die den vom Benutzer erwünschten Dienst bereitstellt, eine IP-Adresse zugeteilt wird, die die geringste Anzahl an reservierten IP-Adressen aufweist.

6. Verfahren nach Anspruch 1, 2 oder 3, **dadurch gekennzeichnet, dass**, wenn der Benutzer Zugriff auf verschiedene Dienste auf unterschiedlichen Diensteinrichtungen (8a, 8b, 8c) will, der Datenverarbeitungseinrichtung (2) aus den Adressdatenbasen (10a, 10b, 10c) derjenigen Diensteinrichtungen (8a, 8b, 8c), die den Dienst bereitstellen, den der Benutzer zuerst angegeben hat, eine IP-Adresse zugeteilt wird.

7. Datenübermittlungssystem (1), das mindestens ein Datennetz (9), mindestens einen Endserver (3) und mindestens eine Identifikationsdatenbank (6), die Daten zum Identifizieren von Benutzern enthält, Mittel zum Identifizieren von Benutzern in der Identifikationsdatenbank (6) und, wenn der Benutzer identifiziert wird, Mittel zum Herstellen mindestens einer Datenstrecke zum Übermitteln von Daten zwischen einer Datenverarbeitungseinrichtung (2) und dem Datennetz (9) und Mittel, um der Datenverarbeitungseinrichtung (2) für die Dauer der Verbindung eine IP-Adresse zuzuteilen, umfasst, **dadurch gekennzeichnet, dass** das Datenübermittlungssystem (1) weiterhin mindestens zwei Diensteinrichtungen (8a, 8b, 8c) umfasst, von denen jede mindestens eine Adressdatenbasis (10a, 10b, 10c) aufweist, und das Datenübermittlungssystem (1) weiterhin Mittel (5) zum Übertragen einer IP-Adresse aus der Adressdatenbasis (10a, 10b, 10c) derjenigen Diensteinrichtung (8a, 8b, 8c), zu der der Benutzer geleitet wird, an die Datenverarbeitungseinrichtung (2) des identifizierten Benutzers umfasst.

8. Datenübermittlungssystem (1) nach Anspruch 7, **dadurch gekennzeichnet, dass** die Identifikationsdatenbank (6) personalisierte Benutzereinstellungen wie auch die Identifikationsdaten des Benutzers umfasst und dass das Datenübermittlungssystem (1) weiterhin mindestens eine Datenkommunikationseinrichtung (7, 8a, 8b, 8c) auf dem Leitweg des IP-Pakets, Mittel (5) zum Konfigurieren der mindestens einen Datenkommunikationseinrichtung (7, 8a, 8b, 8c) auf dem Leitweg des Pakets in Übereinstimmung mit den personalisierten Einstellungen, Mittel (3) zum Erkennen, dass die Benutzerverbindung geschlossen ist, und Mittel (5) zum Entfernen der obigen Konfigurationen, wenn die Verbindung geschlossen ist, umfasst.

9. Datenübermittlungssystem (1) nach Anspruch 7, **dadurch gekennzeichnet, dass** die Identifikationsdatenbank (6) personalisierte Benutzereinstellungen bzw. ein Benutzerprofil wie auch die Identifikationsdaten des Benutzers umfasst, wobei für jedes Profil mindestens eine Adressdatenbasis (10a, 10b, 10c) reserviert ist; und dass das Datenübermittlungssystem (1) weiterhin mindestens eine Datenkommunikationseinrichtung (7, 8a, 8b, 8c) auf dem Leitweg des IP-Pakets; jedem Profil entsprechende Einstellungen, die auf der Datenkommunikationseinrichtung besonders bevorzugt statisch definiert sind, und Mittel (5) zum Übertragen einer IP-Adresse, die zum Übertragen einer IP-Adresse aus der dem Profil entsprechenden Adressdatenbasis (10a, 10b, 10c) an die Datenverarbeitungseinrichtung (2) angeordnet sind, umfasst.

## Revendications

1. Méthode d'assignation d'adresses IP de manière contrôlée dans un système de transfert de données (1) qui comprend au moins un réseau de données (9), dans laquelle méthode un appareil de traitement de données (2) de l'utilisateur se connecte à un serveur à terminal (3), l'identification de l'utilisateur est réalisée dans une base de données d'identification (6) et, si l'utilisateur est identifié, au moins un lien de données dynamique est établi pour transférer les données entre l'appareil de traitement de données (2) de l'utilisateur et le réseau de données (9) et une adresse IP est alors assignée à l'appareil de traitement de données (2) de l'utilisateur pour la durée de la connexion, la méthode étant **caractérisée en ce qu'**au moins deux appareils de service (8a, 8b, 8c) sont équipés chacun d'au moins une mémoire d'adresses (10a, 10b, 10c) et que le serveur directeur (5) assigne au dit appareil de traitement de données (2) une adresse IP issue de la mémoire d'adresses (10a, 10b, 10c) de l'appareil de service (8a, 8b, 8c) vers lequel l'utilisateur doit être dirigé pour utiliser au moins un service assuré par ledit appareil de service (8a, 8b, 8c).

2. Méthode selon la revendication 1, **caractérisée en ce que** les lots IP sont transmis par au moins un appareil de communication de données (7, 8a, 8b, 8c) et que les réglages personnalisés de l'utilisateur ainsi que les données d'identification de l'utilisateur sont stockés dans la base de données d'identification (6) et retrouvés en plus des données d'identification de l'utilisateur, les réglages personnalisés de l'utilisateur étant configurés sur au moins un appareil de communication de données (7a, 8a, 8b, 8c) sur la trajectoire du lot IP avant qu'une adresse IP ne soit envoyée à l'appareil de traitement de données (2), et les configurations étant supprimées du dit au moins un appareil de communication de données (7a, 8a, 8b, 8c) lors que la session est terminée.

3. Méthode selon la revendication 1, **caractérisée en ce que** les lots IP sont transmis par au moins un appareil de communication de données (7, 8a, 8b, 8c) et que les réglages personnalisés de l'utilisateur ou le profil de l'utilisateur ainsi que les données d'identification de l'utilisateur sont stockés dans la base de données d'identification (6) et retrouvés en plus des données d'identification de l'utilisateur et qu'au moins une mémoire d'adresses (10a, 10b, 10c) est réservée pour chaque profil, les réglages correspondant à chaque profil étant définis, au mieux de manière statique, sur au moins un appareil de communication de données (7a, 8a, 8b, 8c) sur la trajectoire du lot IP et une adresse IP issue de la mémoire d'adresses (10a, 10b, 10c) correspondant au dit profil étant assignée à l'appareil de traitement de données (2).

4. Méthode selon la revendication 1, 2 ou 3, **caractérisée en ce qu'**une adresse IP est assignée à l'appareil de traitement de données (2) alternativement en provenance de la mémoire d'adresses (10a, 10b, 10c) de chaque appareil de service (8a, 8b, 8c) qui assure le service désiré par l'utilisateur.

5. Méthode selon la revendication 1, 2 ou 3, **caractérisée en ce qu'**une adresse IP est assignée à l'appareil de traitement de données (2) en provenance de la mémoire d'adresses (10a, 10b, 10c) de chaque appareil de service (8a, 8b, 8c) qui assure le service désiré par l'utilisateur et qui présente le nombre le plus faible d'adresses IP réservées.

6. Méthode selon la revendication 1, 2 ou 3, **caractérisée en ce que,** si l'utilisateur veut accéder à divers services sur différents appareils de service (8a, 8b, 8c), une adresse IP est assignée à l'appareil de traitement de données (2) en provenance des mémoires d'adresses (10a, 10b, 10c) des appareils de service (8a, 8b, 8c) qui assurent le service que l'utilisateur a indiqué en premier.

7. Système de transfert de données (1) qui comprend au moins un réseau de données (9), au moins un serveur à terminal (3) et au moins une base de données d'identification (6) qui contient des données pour identifier les utilisateurs, des moyens d'identification des utilisateurs dans la base de données d'identification (6) et, si l'utilisateur est identifié, des moyens d'établissement d'au moins un lien de données pour transférer des données entre un appareil de traitement de données (2) et le réseau de données (9) et des moyens d'assignation d'une adresse IP à l'appareil de traitement de données (2) de l'utilisateur pour la durée de la connexion, **caractérisé en ce que** le système de transfert de données (1) comprend en outre au moins deux appareils de service (8a, 8b, 8c), chacun comportant au moins une mémoire d'adresses (10a, 10b, 10c) et le système de transfert de données (1) comprenant en outre des moyens (5) de transmission d'une adresse IP à l'appareil de traitement de données (2) de l'utilisateur identifié en provenance de la mémoire d'adresses (10a, 10b, 10c) de l'appareil de service (8a, 8b, 8c) vers lequel l'utilisateur doit être dirigé.

8. Système de transfert de données (1) selon la revendication 7, **caractérisé en ce que** la base de données d'identification (6) comprend des réglages personnalisés de l'utilisateur ainsi que les données d'identification de l'utilisateur et que le système de transfert de données (1) comprend en outre au moins un appareil de communication de données (7, 8a, 8b, 8c) sur la trajectoire du lot IP, des moyens (5) de configuration de l'au moins un appareil de communication de données (7, 8a, 8b, 8c) sur la trajectoire du lot en concordance avec les réglages personnalisés, des moyens (3) de détection de la coupure de la connexion de l'utilisateur et des moyens (5) de suppression des configurations ci-dessus lorsque la connexion est coupée.

9. Système de transfert de données (1) selon la revendication 7, **caractérisé en ce que** la base de données d'identification (6) comprend des réglages personnalisés de l'utilisateur ou un profil d'utilisateur ainsi que les données d'identification de l'utilisateur, au moins une mémoire d'adresses (10a, 10b, 10c) étant réservée pour chaque profil, et que le système de transfert de données (1) comprend en outre au moins un appareil de communication de données (7, 8a, 8b, 8c) sur la trajectoire du lot IP, les réglages correspondant à chaque profil étant au mieux définis de manière statique sur l'appareil de communication de données et les moyens (5) de transmission d'une adresse IP étant agencés pour transmettre une adresse IP à l'appareil de traitement de données (2) en provenance de la mémoire d'adresses (10a, 10b, 10c) correspondant au dit profil.
